(19) Europäisches Patentamt
European Patent Office
Office européen des brevets

(11) Publication number: **0 632 059 A2**

# (12) EUROPEAN PATENT APPLICATION

(21) Application number: **94110043.0**

(22) Date of filing: **28.06.94**

(51) Int. Cl.6: **C08F 2/00**, C08G 85/00, C08F 283/00, C08F 20/24, C08G 59/18, C08G 8/00, C08G 73/06, C08L 33/16, C08L 63/00, C08L 61/04, C08L 79/04

(30) Priority: **30.06.93 JP 161416/93**
**28.09.93 JP 241284/93**
**30.09.93 JP 244817/93**
**24.03.94 JP 53722/94**
**04.04.94 JP 65958/94**

(43) Date of publication of application:
**04.01.95 Bulletin 95/01**

(84) Designated Contracting States:
**DE FR GB NL**

(71) Applicant: **SUMITOMO CHEMICAL COMPANY, LIMITED**
**Kitahama 4-chome 5-33**
**Chuo-ku**
**Osaka 541 (JP)**

(72) Inventor: **Nakamura, Hiroshi**
**13-8, Otsutominami-3-chome**
**Tsuchiura-shi (JP)**
Inventor: **Matsuoka, Yoshiki**
**Kurosunaryo 106,**
**9-22, Kurosuna-3-chome**
**Inage-ku,**
**Chiba-shi (JP)**
Inventor: **Yamatsuta, Kohji**
**4-2, Hiyoshidai-4-chome**
**Otsu-shi (JP)**
Inventor: **Arai, Noriyuki**
**Katsuragiryo 312,**
**40-1, Kasuga-2-chome**
**Tsukuba-shi (JP)**
Inventor: **Shiomi, Yutaka**
**18-5-101, Matsushiro-3-chome**
**Tsukuba-shi (JP)**
Inventor: **Kitayama, Shinichiro**
**15-10, Kinunodai-6-chome,**
**Yawaramura**
**Tsukuba-gun,**
**Ibaraki-ken (JP)**

(74) Representative: **Henkel, Feiler, Hänzel & Partner**
**Möhlstrasse 37**
**D-81675 München (DE)**

## (54) Interpenetrating networks from unsaturated monomers and thermosetting resins.

(57) A cured resin product obtained by mixing (A) a compound having an addition-polymerizable group and capable of yielding a thermoplastic resin by its polymerization and (B) a thermosetting resin to form a uniform solution or dispersion and then curing the component (B) while simultaneously polymerizing the component (A), a process for producing the same, a resin composition, and the use of the same.

EP 0 632 059 A2

## BACKGROUND OF THE INVENTION

### FIELD OF THE INVENTION

The present invention relates to a process for producing a cured resin product improved in those properties which are considered unsatisfactory in cured products of prior thermosetting resins, for example, toughness, dielectric properties, etc.

The present invention also relates to a cured resin product excellent in water repellency, oil repellency and water resistance, a thermosetting resin composition used as the raw material therefor, and a process for producing the cured resin product.

The present invention further relates to a coating film forming resin composition excellent in water repellency, oil repellency and staining resistance, a coating material which uses the composition, a resin composition useful for sealing semiconductor elements, and a resin-sealed semiconductor device which uses the resin composition.

### DESCRIPTION OF THE RELATED ART

It is already known to blend a thermoplastic resin into a thermosetting resin in order to impart such properties as, for example, toughness and excellent dielectric characteristics to the thermosetting resin. Thermoplastic resins used for such purposes include common elastomers and engineering plastics. It is also known to incorporate oligomers having a functional group at the terminal into the blend in order to prevent the increase of viscosity in such blending.

It is also known to improve the physical properties of a thermosetting resin by incorporating thereinto particles of other resins. USP Nos. 4,524,181 and 4,708,996 and Kobunshi Ronbunshu (Collection of Polymer Papers) (47, No. 4, 277 (1990)) disclose a method which comprises polymerizing and dispersing polymer particles into uncured epoxy resin.

USP No. 4,524,181 discloses a process which comprises, for the purpose of improving the mechanical and thermal property of epoxy resins, blending an acrylic monomer, or a diisocyanate and a diol etc. into uncured epoxy resin with the aid of a dispersion stabilizer and polymerizing them in situ, thereby to obtain a stable acrylic polymer particle dispersion system or a stable polyurethane or polyurea particle dispersion system which contains uncured epoxy resin as the continuous phase.

USP No. 4,708,996 discloses a process which comprises, for the purpose of improving the toughness of epoxy resin while preventing its softening temperature from lowering, dispersing an acrylic monomer into uncured epoxy resin with the aid of a dispersion stabilizer and polymerizing the monomer in situ, thereby to obtain uncured epoxy resin containing the acrylic polymer stably dispersed therein.

In the above-mentioned Collection of Polymer Papers, a process is described which comprises dissolving butyl acrylate monomer and mono(ethylene glycol) dimethacrylate into a bisphenol A type epoxy resin and then, as the first stage, subjecting them to in situ photopolymerization to form crosslinked acrylic polymer particles in the epoxy resin and in the second stage curing the epoxy resin, with the intention of lowering the internal stress in cured resin.

On the other hand, the following techniques have hitherto been known for imparting water repellency, oil repellency or water resistance to a material.

First, it is known to obtain water repellent and oil repellent molded articles by using polytetrafluoroethylene (hereinafter referred to as PTFE), which has excellent water repellency and oil repellency, as the material.

For example, there is known a process which comprises preforming PTFE powders at ordinary temperature and then heating and sintering the preformed article at 360°-390°C, which is higher than the melting point, to obtain a PTFE formed article. The methods used for forming include compression molding and extrusion, the former being used for obtaining sheets, blocks and simple shapes and the latter for continuous formed articles, such as tubes. There is also known a technique which forms various shapes by shaving the block thus obtained. This process, however, has disadvantages in that PTFE is not fully satisfactory in formability and resin strength and is an expensive material.

Japanese Patent Kokai (JP-A) No. 58-172245 discloses a method of treating the surface of a substrate, such as glass, by using a perfluoroalkyl group-containing silane compound as a fluorine-containing silane coupling agent, whereby a water repellent and oil repellent surface on which perfluoroalkyl groups arrange themselves in order can reportedly be obtained without impairing the surface appearance. However, this method sometimes causes deterioration of surface properties due to abrasion of the surface and hence is not satisfactory for some uses.

It is also known that, in systems of thermoplastic resins as acrylic resin, polystyrene, polypropylene, etc., a water repellent and oil repellent surface can be obtained without losing the characteristic properties inherent to the thermoplastic resin constituting the base by kneading thereinto a co-oligomer comprising perfluoroalkyl group-containing acrylate or methacrylate as the main component and having a molecular weight of about 3,000-10,000.

A process is also known which comprises coprecipitating PTFE fine particles or fluorinated graphite with nickel to obtain a composite surface comprising nickel-PTFE or nickel-fluorinated graphite on the substrate surface. An excellent water repellency can be exhibited, the contact angle to water of the resulting surface being 100-110° for the former and 130° for the latter.

In recent years, sealing of semiconductor elements, such as LSI, IC and transistors, have been performed by the use of epoxy resins by virtue of the superiority of the resins in performances and prices. For such sealing, there are used transfer molding which uses solid epoxy resins and casting or dipping which uses liquid epoxy resins. A number of improvements have been made on epoxy resins intended for this use. Particularly among them, various methods have been studied with the intention of enhancing the performance of uncured epoxy resin systems by incorporating a different kind of polymer thereinto.

## SUMMARY OF THE INVENTION

The prior art method of blending a thermosetting resin with a thermoplastic resin is subject to serious limitation with respect to the combination of resins which can be used and the molecular weight thereof from the viewpoint of compatibility and operability. Particularly, since a thermoplastic resin of high molecular weight has come to be used, which is needed for obtaining enhanced performances, it has brought a problem of markedly increasing the viscosity of the system and giving poor moldability and operability. Further, it has a problem of requiring many process steps including synthesis of thermoplastic resin, blending thereof with thermosetting resin, solvent removal when a solvent is used, and curing of the composition. The use of an oligomer containing terminal functional groups also has difficulties in that a large amount of oligomer is necessary for attaining high performances and that the oligomer undergoes a reaction with the matrix thermosetting resin rather than the chain extension reaction of itself. Thus, this method is not yet satisfactory with respect to moldability, operability or the performance of cured products.

On the other hand, the method of polymerizing in situ a thermoplastic resin in uncured thermosetting resin is somewhat superior among the above-mentioned methods with regard to process steps, but still requires two stages of step-polymerization and curing. Further, it inevitably gives rise to the enhancement of viscosity of the composition and thus is poor in operability.

An object of the present invention is to provide a process for producing a cured resin product improved in those properties which are considered unsatisfactory in cured products of prior thermosetting resins, for example, toughness, dielectric properties, etc. which process is excellent in operability and productivity.

Another object of the present invention is to provide a cured resin product used as a resin material which is excellent in mechanical and thermal properties and has a high degree of water repellency, oil repellency and water resistance stably and over a long period, a process for producing the cured resin product with excellent productivity, and a thermosetting resin composition used as the raw material for the cured resin product.

A further object of the present invention is to provide a composition for forming water repellent coating film excellent in water repellency and in staining resistance, a coating material obtained therefrom, a resin composition useful for sealing semiconductor elements which can improve the water resistance without impairing the good properties inherent to epoxy resins, and a resin-sealed semiconductor device obtained therefrom.

The present invention consists of the following inventions.

(1) A process for producing a cured resin product which comprises mixing (A) a compound having an addition-polymerizable group and capable of yielding a thermoplastic resin by its polymerization and (B) a thermosetting resin to form a homogeneous solution or uniform dispersion and curing the component (B) while simultaneously polymerizing the component (A).

(2) A cured resin product wherein domains of a fluorine-containing polymer are distributed on the surface and in the inside of a cured product of a thermosetting resin.

(3) A cured resin product which comprises a cured product of a thermosetting resin and fine particles of a fluorine-containing polymer uniformly dispersed in the cured product of a thermosetting resin.

(4) A thermosetting resin composition which comprises a perfluoroalkyl group-containing polymerizable monomer represented by the above formula (4) and an epoxy resin as essential components.

(5) A coating film forming composition which comprises (A) a compound having an addition-polymerizable group and capable of yielding a thermoplastic resin by its polymerization and (B) a thermosetting resin, said compound (A) being homogeneously dissolved or dispersed in the thermosetting resin (B).

(6) A water-repellent coating film forming composition which comprises a thermosetting resin and a fluorine-containing radical-polymerizable monomer uniformly dispersed in the resin.

(7) A water repellent coating material which contains the water repellent coating film composition described in above (b) as the main component.

(8) A resin composition for sealing semiconductor elements which comprises (A) a compound having an addition-polymerizable group and capable of yielding a thermoplastic resin by its polymerization and (B) a thermosetting resin, said compound (A) being uniformly dissolved or dispersed in the resin (B).

(9) A resin composition for sealing semiconductor elements which comprises the following components (a), (b), (c) and (d) as essential ingredients, wherein the fluorine-containing radical-polymerizable monomer of the component (c) is uniformly dispersed in the system in the presence of a dispersion stabilizer:

(a) an epoxy resin having at least two epoxy groups in the molecule,
(b) an epoxy resin curing agent,
(c) a fluorine-containing radical-polymerizable monomer,
(d) a radical polymerization initiator.

(10) A resin-sealed semiconductor devices which is obtained by sealing with the resin composition for sealing semiconductor elements described in above (9).

The component (A) used in the present invention is a compound having an addition-polymerizable group and capable of yielding a thermoplastic resin by its polymerization. The compound of the component (A) may be, for example, compounds having a carbon-carbon double bond and urethane type compounds. Particularly preferred among them are various radical-polymerizable monomers having a carbon-carbon double bonds.

As examples of the compound having a carbon-carbon double bond, there may be mentioned monomers having a polymerizable carbon-carbon double bond group represented by the formula (1) and/or the formula (2), and an oligomer having a polymerizable carbon-carbon double bond at one terminal represented by the formula (3):

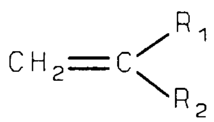

(1),

wherein $R_1$ is a hydrogen atom, a methyl group or a chlorine atom; and $R_2$ is an alkyl group having 3 to 18 carbon atoms, a 6-membered cyclic hydrocarbon group having 6-18 carbon atoms, a halogen atom, $OR_3$,

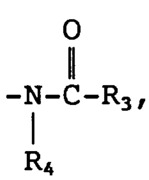
,
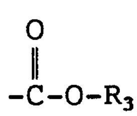
,
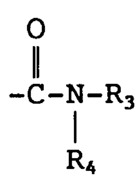

or -CN,
wherein $R_3$ and $R_4$ are each independently a hydrogen atom, an alkyl group having 1-18 carbon atoms; an alkyl group having 9-18 carbon atoms and having as substituents a hydroxyl group and a substituted or unsubstituted phenoxy group or cycloalkyloxy group; a 5- or 6-membered cyclic hydrocarbon group having 5-18 carbon atoms; or an alkoxyalkyl group having 2-18 carbon atoms; provided that $R_3$ together with $R_4$ and with

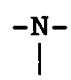 or 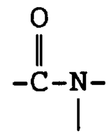

bonded thereto may form a 5- or 6-membered ring, which ring may have an alkyl group having 1-6 carbon atoms or an aryl group as a substituent,

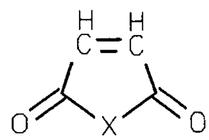 (2),

wherein X is
-O- or

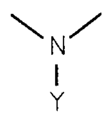 ,

wherein Y is a substituted or unsubstituted phenyl group or a substituted or unsubstituted cyclohexyl group,

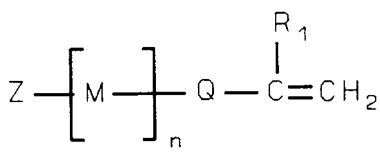 (3),

wherein n is a number of 2-100, Z is a hydrogen atom, a halogen atom, an alkyl group having 1-5 carbon atoms or a 6-membered ring hydrocarbon group having 5-18 carbon atoms, $R_1$ is the same as defined in the formula (1), Q is

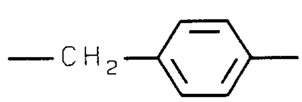 , 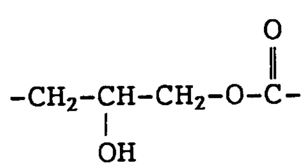 or

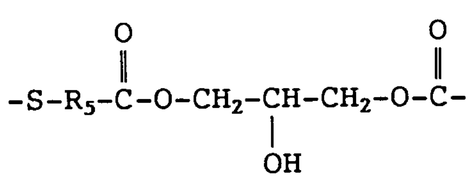 ,

wherein $R_5$ is an alkylene group having 1-5 carbon atoms, and M is

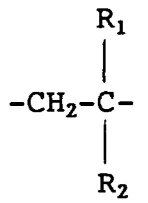 , 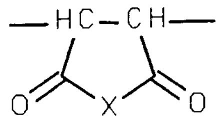 ,

-D-O- or

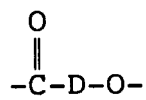 ,

wherein $R_1$, $R_2$ and X are each the same as defined in the formula (1) and the formula (2), and D is an aromatic hydrocarbon group having 6-18 carbon atoms.

In the definition of $R_2$ of the formula (1), the alkyl group having 3-18 carbon atoms may be, for example, propyl, butyl, decyl, and octadecyl (including the isomers thereof). The 6-membered ring hydrocarbon group having 6-18 carbon atoms may be, for example, phenyl, naphthyl, anthryl, tolyl, xylyl and biphenyl (including the isomers thereof). The halogen atom may be, for example, a chlorine atom and a bromine atom.

In the definition of $R_3$ and $R_4$, the alkyl group having 1-18 carbon atoms may be, for example, methyl, ethyl, propyl, butyl, decyl and octadecyl (including the isomers thereof). The alkyl group having 9-18 carbon atoms and having as substituents a hydroxyl group and a substituted or unsubstituted phenoxy group or cycloalkyloxy group may be, for example, 2-hydroxy-3-phenoxypropyl, 2-hydroxy-3-cyclohexyloxypropyl and 2-hydroxy-3-nonylphenoxypropyl. The 5- or 6-membered ring hydrocarbon group having 5-18 carbon atoms may be, for example, cyclopentyl, cyclohexyl, dicyclopentadienyl, phenyl, tolyl, xylyl, naphthyl, anthryl and biphenyl (including the isomers thereof). The alkoxyalkyl group having 2-18 carbon atoms may be, for example, methyloxymethyl, methyloxyethyl, methyloxypropyl, methyloxypentadecyl, ethyloxymethyl, ethyloxyethyl, ethyloxypropyl and ethyloxypentadecyl (including the isomers thereof).

Examples of the alkyl group having 1-6 carbon atoms or aryl group which may exist as the substituent in the 5- or 6-membered ring formed by $R_3$ together with $R_4$ and with other groups include methyl, ethyl, propyl, butyl, pentyl, hexyl and phenyl (including the isomers thereof)

In the definition of Y relating to the formula (2) and formula (3), the substituted phenyl group and the substituted cyclohexyl group may respectively be, for example, tolyl, xylyl, p-triphenylphenyl, p-tert-butylphenyl, 4-methylcyclohexyl, 4-ethylcyclohexyl and 4-tert-butylhexyl (including the isomers thereof).

In the definition of Z of the formula (3), the alkyl group having 1-5 carbon atoms may be, for example, methyl, ethyl, propyl, butyl and pentyl (including the isomers thereof). The 6-membered ring hydrocarbon group having 6-18 carbon atoms may be, for example, cyclohexyl, phenyl, tolyl, xylyl, naphthyl, anthryl and biphenyl (including the isomers thereof). In the definition of $R_5$, the alkylene group having 1-5 carbon atoms may be, for example, methylene, dimethylene, trimethylene, tetramethylene and pentamethylene (including the isomers thereof). In the definition of D, the aromatic hydrocarbon group having 6-18 carbon atoms may be, for example, phenylene, tolylene and xylylene (including the isomers thereof).

Specific examples of the compound having a carbon-carbon double bond represented by the formula (1) include styrene, styrenes represented by substituted styrenes, acrylic esters such as methyl acrylate, methacrylic esters such as methyl methacrylate, acrylonitrile, acrylic amides, chlorinated vinyl compounds such as vinyl chloride, vinylpyridine, N-vinylpyrrolidone and N-vinylcarbanole.

Specific examples of the compound having a carbon-carbon double bond represented by the formula (2) include N-substituted maleimides such as N-phenylmaleimide and N-cyclohexylmaleimide.

The oligomer having a polymerizable carbon-carbon double bond group at one terminal represented by the formula (3) may be, for example, styrene macromonomer having methacrylate at one terminal, acrylonitrile macromonomer having methacrylate at one terminal, methyl methacrylate macromonomer having methacrylate at one terminal, p-hydroxybenzoic acid macromonomer having methacrylate at one terminal, methyl methacrylate macromonomer having styrene at the terminal and phenylene ether macromonomer having styrene at one terminal. These oligomers have a molecular weight of preferably less than

about 10,000, more preferably less than about 3,000, because oligomers having a molecular weight exceeding 10,000 are very poor in compatibility with thermosetting resin. The oligomer can be used in combination with the monomer having a carbon-carbon double bond represented by the formula (2) or the formula (3).

The urethane type compound is not particularly limited so long as it comprises the combination of a compound having an isocyanate group with a compound having a hydroxyl group. Specific examples of the compound having an isocyanate group include tolylene diisocyanate, 4,4'-diphenylmethane diisocyanate, xylylene diisocyanate, hexamethylene diisocyanate, isophorone diisocyanate, methylenebis(4-cyclohexylisocyanate), and trimethylhexamethylene diisocyanate. Specific examples of the compound having a hydroxyl group include poly(propylene oxide)diol, copoly(ethylene oxide-propylene oxide)diol, poly(tetramethylene oxide)diol, ethoxylated bisphenol A, ethoxylated bisphenol S, spiroglycol, caprolactone-modified diol, and carbonate diol.

For producing a cured resin product excellent in toughness, it is preferable to use styrene, methyl methacrylate, acrylonitrile, or a combination of styrene with N-phenylmaleimide as the compound of the component A having an addition-polymerizable group and capable of yielding a thermoplastic resin by its polymerization. For producing a cured resin product having a low dielectric constant, it is preferable to use styrene or the like as the component (A).

Further, to impart adhesiveness to the interface of the thermosetting resin phase and the thermoplastic resin phase and thereby to prevent the lowering of mechanical strength inherent to respective component resins, a monomer having a reactive group, such as glycidyl methacrylate, may be used together.

The amount of the compound of the component (A) to be added is 0.1-100 parts by weight, preferably 0.5-100 parts by weight, more preferably 0.5-50 parts by weight relative to 100 parts by weight of the thermosetting resin of the component (B).

For improving the toughness and dielectric properties of the cured resin product of the present invention, the compound of the component (A) is added in an amount of preferably 5-100 parts by weight, more preferably 10-50 parts by weight relative to 100 parts by weight of the thermosetting resin of the component (B). When the amount is less than 5 parts by weight, the improvement of intended properties as toughness and dielectric characteristics cannot be attained in the resulting cured resin product. When the amount exceeds 100 parts by weight, the cured resin product has a markedly lowered mechanical strength.

To polymerize the compound of the component (A), a polymerization initiator, e.g., radical polymerization initiator, may be used as occasion demands. Examples of the polymerization initiator include peroxides, such as cumene hydroperoxide, tert-butyl hydroperoxide, dicumyl peroxide, di-tert-butyl hydroperoxide, benzoyl peroxide, acetyl peroxide and lauroyl peroxide; azo compounds such as azobisisobutyronitrile; hydrogen peroxide-$Fe^{2+}$, persulfates-$NaHSO_3$, and benzoyl peroxide-dimethylaniline. There may also be used such basic compounds as triphenylphosphine, amines, such as 2,4,6-tris(dimethylaminomethyl)phenol and 1,8-diazabicycloundecene, and imidazole compounds such as 2-ethyl-4-methylimidazole. These initiators are suitably selected in consideration of curing temperature and gelation time of the thermosetting resin.

The polymerization initiator may be used after dissolved either in the compound of the component (A) or in the thermosetting resin of the component (B). The initiator is added in an amount of preferably 0.1-5.0% by weight relative to the compound of the component (A).

The thermosetting resin of the component (B) used in the present invention may be, for example, epoxy resin, polymaleimide resin, cyanate resin, phenol resin, unsaturated polyester resin, vinyl ester resin, phenol resin, xylene resin, urea resin, melamine resin, alkyd resin and furan resin. Particularly preferred among them are epoxy resin, polymaleimide resin, cyanate resin, phenol resin, unsaturated polyester resin and vinyl ester resin. Most preferred is an epoxy resin which is liquid at room temperature in the uncured state.

The epoxy resin used in the present invention will be described in detail below. The epoxy resin referred to in the present invention means a compound having at least two epoxy groups in the molecule. It may be suitably selected depending on the intended final products.

For example, since a bifunctional epoxy resin is excellent in improving the toughness of the product and a multi-functional epoxy resin having 3 or more epoxy groups is excellent in point of heat resistance, one kind or two or more kinds of resins can be selected for use from the two types of epoxy resins depending on the intended purposes.

The epoxy resin used in the present invention may be those known to the art and include, for example, novolak-type epoxy resins which are the reaction products of phenols, such as phenol, cresol and naphthol, with formaldehyde; glycidyl ether compounds derived from tri or more hydric phenols, such as phloroglucinol, tris(4-hydroxyphenyl)methane and 1,1,2,2-tetrakis(4-hydroxyphenyl)ethane; diglycidyl ether compounds derived from dihydric phenols, such as bisphenol A, bisphenol F, bisphenol S, hydroquinone,

resorcinol, dihydroxybiphenyl and dihydroxynaphthalene, or halogenated bisphenols such as tetrabromobisphenol A; glycidyl ether compounds of polyhydric phenols obtained by condensation of phenols with aromatic carbonyl compounds; amine-type epoxy resins derived from p-aminophenol, m-aminophenol, 4-amino-m-cresol, 6-amino-m-cresol, 4,4'-diaminodiphenylmethane, 3,3'-diaminodiphenylmethane, 4,4'-diaminodiphenyl ether, 3,4'-diaminodiphenyl ether, 1,4-bis(4-aminophenoxy)-benzene, 1,4-bis-(3-aminophenoxy)benzene, 1,3-bis(4-aminophenoxy)benzene, 1,3-bis(3-aminophenoxy)benzene, 2,2-bis(4-aminophenoxyphenyl)propane, p-phenylenediamine, m-phenylenediamine, 2,4-toluenediamine, 2,6-toluenediamine, p-xylylenediamine, m-xylylenediamine, 1,4-cyclohexanebis(methylamine), and 1,3-cyclohexane-bis(methylamine); glycidyl ester type compounds derived from aromatic carboxylic acids, such as p-oxybenzoic acid, m-oxybenzoic acid, terephthalic acid and isophthalic acid; hydantoin type epoxy compounds derived from 5,5-dimethylhydantoin or the like; alicyclic epoxy resins, such as 2,2-bis(3,4-epoxycyclohexyl)propane, 2,2'-bis[4-(2,3-epoxypropyl)cyclohexyl]propane, vinylcyclohexene dioxide, and 3,4-epoxycyclohexylmethyl-3,4-epoxycyclohexanecarboxylate. One or more of these epoxy resins may be used, but the epoxy resin is not limited to those listed above.

An epoxy resin curing agent may be used as occasion demands. Such curing agents may be those known to the art. Examples thereof include amine type curing agent, such as triethylenetetramine, isophoronediamine, m-xylenediamine, diaminodiphenyl sulfone and dicyandiamide; polyphenol compounds such as phenol novolak and cresol novolak; acid anhydrides such as methylhexahydrophthalic anhydride, hexahydrophthalic anhydride, pyromellitic anhydride and trimellitic anhydride; and further hydrazide compounds. The curing agent is mixed into the epoxy resin so as to give a molar ratio of the active hydrogen of the curing agent to the epoxy of 0.5 to 1.5.

A curing accelerator may be added as desired. Examples of the curing accelerator include amines such as benzyldimethylamine, 2,4,6-tris(dimethylaminomethyl)-phenol and 1,8-diazabicycloundecene; imidazole compounds such as 2-ethyl-4-methylimidazole; boron trifluorideamine complexes, and organic phosphines such as triphenylphosphine.

The polymaleimide resin may be, for example, N,N'-diphenylmethane bismaleimide, N,N'-phenylene bismaleimide, N,N'-diphenyl ether bismaleimide, N,N'-diphenylsulfone bismaleimide, N,N'-dicyclohexylmethane bismaleimide, N,N'-xylene bismaleimide, N,N'-tolylene bismaleimide, N,N'-diphenylmethane bismethylmaleimide, N,N'-diphenyl ether bismethylmaleimide and N,N'-diphenyl sulfone bismethylmaleimide (including the isomers thereof respectively); N,N'-ethylene bismaleimide, N,N'-hexamethylene bismaleimide, N,N'-hexamethylene bismethylmaleimide; prepolymers having an N,N'-bismaleimide skeleton at the terminal obtained by addition reaction of these N,N'-bismaleimide compounds with diamines; and resins comprising maleimides or methylmaleimides of amiline-formaldehyde polycondensation products.

The cyanate resin may be, for example, 1,3- or 1,4-dicyanatobenzene, 1,3,5-tricyanatobenzene, 1,3-, 1,4-, 1,6-, 1,8-, 2,6- or 2,7-dicyanatonaphthalene, 1,3,6-tricyanatonaphthalene, 4,4'-dicyanatobiphenyl, bis(4-cyanatophenyl)methane, 2,2-bis(4-cyanatophenyl)propane, 2,2'-bis(3,5-dichloro-4-cyanatophenyl)propane, 2,2-bis(3,5-dibromo-4-cyanatophenyl)propane, bis(4-cyanatophenyl) thioether, bis(4-cyanatophenyl) sulfone, tris(4-cyanatophenyl) phosphite tris(4-cyanatophenyl) phosphate; and polycyanate compounds of polybenzene-nuclear compounds obtained by the reaction of phenol resins with halogenocyans (disclosed, for example, in Japanese Patent Kokoku (JP-B) Nos. 45-11712 and 55-19433).

The phenol resin may be addition-condensation products of phenols with aldehydes. Specific examples are addition-condensation products of phenol, o-cresol, m-cresol, p-cresol, 2,3-xylenol, 2,4-xylenol, 2,5-xylenol, 2,6-xylenol, 3,4-xylenol, 3,5-xylenol, o-ethylphenol, m-ethylphenol, p-ethylphenol, p-phenylphenol, p-tert-butylphenol, p-tert-amylphenol, bisphenol A, resorcinol, or the like with formaldehyde, paraformaldehyde, hexamethylenetetramine, furfural, or the like.

When the thermosetting resin in uncured state is crystalline at room temperature, the resin is preferably used after converted into the form of prepolymer.

Among the thermosetting resins described above, particularly preferred are epoxy resins from the viewpoint of handling, curing property, and performances of cured product.

In mixing the component (A) with the component (B) in the present invention, there may be blended there-into as a filler particulates of talc, mica, calcium carbonate, hydrated alumina, silicon carbide, carbon black, silica, etc. and whiskers of silicon carbide, aluminum borate and the like, according to intended purposes.

In the present invention, the process of mixing the component (A) and the component (B) to form a homogeneous solution or uniform dispersion can be effected, for example, by mechanically mixing the two components.

In the present invention, the process of curing the component (B) in the mixture of the component (A) with the component (B) while simultaneously polymerizing the component (A) can be effected, for example,

by preliminarily incorporating into the mixture a curing agent and curing accelerator for the component (B) and a polymerization initiator for the component (A), and conducting the reaction until the curing and the polymerization of respective components reach to completion.

In this case, in order to prevent the polymer of the component (A) and the cured product of the component (B) from severely separating from each other in the course of curing and polymerization to cause the deterioration of physical properties of the cured resin product, the time necessary for completion of polymerization of the component (A) is desirably equal to or less than the gelation time of the component (B). Further, the polymerization initiation time of the component (A) and the curing initiation time of the component (B) is preferably nearly the same.

The polymerization initiation time and completion time of the component (A) can be controlled by the kind and amount of the polymerization initiator, temperature, etc.

The curing initiation time and gelation time of the component (B) can be controlled by the kind and amount of the curing agent and curing accelerator, temperature, etc.

The method used for curing and polymerizing the mixture comprising the component (A), component (B), polymerization initiator, curing agent, curing accelerator and other additives while simultaneously forming the mixture into a shape may be those used for forming prior thermosetting resins as casting, transfer molding and press molding. It is also possible to coat the mixture on a substrate and cure it.

Hereunder, detail description is given of the combination of a fluorine-containing polymerizable monomer with a thermosetting resin. Particularly preferred fluorine-containing polymerizable monomers are radical-polymerizable ones.

The fluorine-containing radical-polymerizable monomers used in the present invention are not particularly limited so long as they are radical-polymerizable fluorine-containing ones. Preferably they are various fluorine-containing radical-polymerizable monomers having are ethylenic double bond. Specific examples thereof include fluorine-substituted products of acrylic esters such as methyl acrylate, methacrylic esters such as methyl methacrylate, acrylic acid, methacrylic acid, vinyl esters such as vinyl acetate, and styrene and styrene represented by substituted styrenes.

For producing a cured product of thermosetting resin excellent in water repellency and oil repellency, it is preferable to use, as the fluorine-containing radical-polymerizable monomer, a fluorine-containing acrylate or methacrylate monomer having a perfluoroalkyl group represented by the following formula (4):

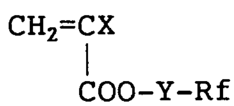

(4),

wherein X is a hydrogen atom, a chlorine atom, a fluorine atom or a methyl group; Y is an alkylene group having 1-4 carbon atoms or $-(CH_2)_nN(R)SO_2-$, in which R is an alkyl group having 1-4 carbon atoms or a hydrogen atom, and n is an integer of 1-4; and $R_f$ is a fluroalkyl group having 1-15 carbon atoms and having a perfluoroalkyl group at the terminal.

Particularly preferred fluorine-containing acrylate or methacrylate monomers having a perfluoroalkyl group mentioned above are fluorine-containing monomers represented by fluorine-containing alcohol esters of acrylic acid, methacrylic acid, fluoroacrylic acids such as α-fluoroacrylic acid, and fluoromethacrylic acid. The fluorine-containing monomer may be either liquid or solid at room temperature.

Specific examples of the fluorine-containing alcohol esters of acrylic acid and α-fluoroacrylic acid include 2,2,2-trifluoroethyl acrylate, 2,2,3,3,3-pentafluoropropyl acrylate, 2-(perfluorobutyl)ethyl acrylate, 2-(perfluorohexyl)ethyl acrylate, 2-(perfluorooctyl)ethyl acrylate, 2-(perfluorodecyl)ethyl acrylate, 2-(perfluoro-3-methylbutyl)ethyl acrylate, 2-(perfluoro-5-methylhexyl)ethyl acrylate, 2-(perfluoro-9-methyloctyl)ethyl acrylate, 2-(perfluoro-9-methyldecyl)ethyl acrylate, 2,2,3,4,4,4-hexafluorobutyl acrylate, 2,2,2-trifluoro-1-trifluoromethylethyl acrylate, 3-perfluorobutyl-2-hydroxypropyl acrylate, 3-perfluorohexyl-2-hydroxypropyl acrylate, 3-perfluorooctyl-2-hydroxypropyl)acrylate, 3-(perfluoro-3-methylbutyl)-2-hydroxypropyl acrylate, N-propyl-N-(β-acryloxyethyl)perfluorooctanesulfonamide, N-ethyl-N-(β-acryloxyethyl)perfluorooctanesulfonamide, N-butyl-N-(β-acryloxyethyl)perfluorooctanesulfonamide, and α-position fluorine-substituted products of these. The esters, however, are not limited to these examples.

To obtain a water repellent and oil repellent surface with good efficiency, it is preferable that the perfluoroalkyl groups in the fluorine-containing polymer domains in charge of these properties are oriented in the surface direction. From this viewpoint, the acrylates are preferably those wherein the fluoroalkyl groups ($R_f$) in the formula (4) is of a straight chain having 8 or more carbon atoms, and the α-fluoroacrylates

are preferably those wherein the fluoroalkyl group ($R_f$) in the formula (4) is of a straight chain having 2 or more carbon atoms.

Specific examples of the fluorine-containing alcohol ester of methacrylic acid include 2,2,2-trifluoroethyl methacrylate, 2,2,3,3,3-pentafluoropropyl methacrylate, 2-(perfluorobutyl)ethyl methacrylate, 2-(perfluorohexyl)ethyl methacrylate, 2-(perfluorooctyl)ethyl methacrylate, 2-(perfluorodecyl)ethyl methacrylate, 2-(perfluoro-3-methylbutyl)ethyl methacrylate, 2-(perfluoro-5-methylhexyl)ethyl methacrylate, 2-(perfluoro-7-methyloctyl)ethyl methacrylate, 2-(perfluoro-9-methyldecyl)ethyl methacrylate, 2,2,3,4,4,4-hexafluorobutyl methacrylate, 2,2,2-trifluoro-1-trifluoromethylethyl methacrylate, 3-(perfluoro-3-methylbutyl)-2-hydroxypropyl methacrylate, 3-(perfluoro-5-methylhexyl)-2-hydroxypropyl methacrylate, 3-(perfluoro-7-methyloctyl)-2-hydroxypropyl methacrylate, 3-(perfluoro-8-methyldecyl)-2-hydroxypropyl methacrylate, N-propyl-N-($\beta$-methacryloxyethyl)perfluorooctanesulfonamide, N-ethyl-N-($\beta$-methacryloxyethyl)perfluorooctanesulfonamide, and N-butyl-N-($\beta$-methacryloxyethyl)perfluorooctanesulfonamide.

From the viewpoint of water repellency and oil repellency, the methacrylates are preferably those wherein the fluoroalkyl group ($R_f$) in the formula (4) is of a straight chain having 8 or more carbon atoms.

These fluorine-containing alcohol esters of acrylic acid, methacrylic acid and $\alpha$-fluoroacrylic acid may be used either singly or in a combination of two or more thereof. Furthermore, other radical-polymerizable monomers may be added to one or more of the above-mentioned esters for use in the present invention within limits not dielectrious to the effect of the present invention.

In the thermosetting resin composition of the present invention, the fluorine-containing radical-polymerizable monomer may be present either dissolved in the thermosetting composition or undissolved in the composition. In heating the thermosetting resin composition to effect polymerization and curing, the polymerization of the fluorine-containing radical-polymerizable monomer in the thermosetting resin, e.g. epoxy resin, that is in the course of curing, may proceed in any of the forms of suspension polymerization, emulsion polymerization and dispersion polymerization, provided that when a fluorine-containing acrylate or methacrylate monomer having a sulfonamide group is used as the fluorine-containing radical-polymerizable monomer, it is preferable to select the thermosetting resin, e.g., epoxy resin, and the curing agent therefor such that the polymerization may proceed in the form of dispersion polymerization.

In the present invention, the fluorine-containing radical-polymerizable monomer is added in an amount of 0.1-100 parts by weight, preferably 0.5-100 parts by weight, more preferably 0.5-50 parts by weight relative to 100 parts by weight of the thermosetting resin. When the fluorine-containing radical-polymerizable monomer is to be dispersed uniformly in the cured product of the thermosetting resin after its polymerization, the amount is preferably 5-100 parts by weight, more preferably 10-50 parts by weight. When the amount is less than 0.1 part by weight, the desired water repellency and oil repellency cannot be attained. When the amount exceeds 100 parts by weight, the mechanical strength of intended cured resin product is undesirably lowered.

The polymerization initiator used for the polymerization of the fluorine-containing radical-polymerizable monomer is not particularly limited. It may be, for example, cumene hydroperoxide, tert-butyl hydroperoxide, dicumyl peroxide, di-tert-butyl peroxide, benzoyl peroxide, acetyl peroxide, lauroyl peroxide, azobisisobutyronitrile, hydrogen, peroxide-$Fe^{2+}$, persulfates-$NaHSO_3$, and benzoyl peroxide-dimethylaniline.

The polymerization initiator may be dissolved either in the fluorine-containing radical-polymerizable monomer or in the thermosetting resin. Azo initiators, such as azobisisobutyronitrile, are preferably used as the polymerization initiator. The polymerization initiator is preferably added in an amount of 0.01-5.0% by weight relative to the fluorine-containing radical-polymerizable monomer.

These polymerization initiator systems are properly selected in consideration of the curing temperature and gelation time of the thermosetting resin system which will constitute the matrix. When the curing of the thermosetting resin proceeds in advance to the polymerization of the fluorine-containing radical-polymerizable monomer, voids are apt to develop between the cured thermosetting resin and the particles of the polymer formed from the fluorine-containing radical-polymerizable monomer owing to a large polymerization shrinkage of the fluorine-containing radical-polymerizable monomer, which causes particularly the lowering of mechanical properties. In order to secure the excellent property of the present resin system, therefore, it is preferable to finish the polymerization of the fluorine-containing radical-polymerizable monomer before the curing of the thermosetting resin reaches completion.

A dispersion stabilizer may be used in the present invention. The dispersion stabilizer is useful for dispersing the fluorine-containing radical-polymerizable monomer, e.g. a polymerizable monomer containing a perfluoroalkyl group, in uncured thermosetting resin, or for dispersing the fluorine-containing polymer in the cured product of the thermosetting resin. The dispersion stabilizer is preferably an oligomer or polymer having a fluoroalkyl portion, for example, an oligomer or polymer having a perfluoroalkyl group as a hydrophobic group. Specific examples of preferred dispersion stabilizers are listed below.

(1) MEGAFAC F-177 (a trade name, perfluoroalkyl group-containing oligomer, mfd. by Dainippon Ink and Chemicals, Inc., nonionic).

(2) FLUORAD FC-430 (a trade name, fluoroaliphatic polymeric esters, mfd. by Minnesota Mining and Manufacturing Company (3M), nonionic),

(3) UNIDYNE DS-451 (a trade name, perfluorooligomer, mfd. by Daikin Industries, Ltd., nonionic).

The dispersion stabilizer is added in an amount of preferably 0.01-5.0 parts by weight, more preferably 0.1-1.0 part by weight, relative to 100 parts by weight of the thermosetting resin.

The composition of the present invention comprising a fluorine-containing radical-polymerizable monomer and a thermosetting resin may usefully be, according to intended purposes, incorporated with particulates of talc, mica, calcium carbonate, hydrated alumina, silicon carbide, carbon black and silica and whiskers of silicon carbide, aluminum borate, etc. as a filler and with, for example, acetone, methyl ethyl ketone, ethyl acetate and tetrahydrofuran as an organic solvent.

In the system of the present invention comprising the combination of a fluorine-containing polymerizable monomer and a thermosetting resin, a favorably used thermosetting resin is a system comprising an epoxy resin and a curing agent. The curing agent used herein may be those described before. If necessary, the aforesaid curing accelerator may be used together.

In this case, the thermosetting resin composition comprising an epoxy resin, a curing agent, etc. is preferably in the form of liquid near room temperature, because it facilitates the mixing and handling of the composition and the fluorine-containing radical-polymerizable monomer described below.

When a fluorine-containing acrylate or methacrylate having a sulfonamide group is used as the fluorine-containing radical-polymerizable monomer, the curing agent used therefor is preferably an alicyclic anhydride, e.g., methylhexahydrophthalic anhydride and tetrahydrophthalic anhydride.

Hereunder, thin film forming according to the process for producing a cured product of thermosetting resin of the present invention is described. The thermosetting resin composition of the present invention is coated on a substrate and then cured to form thin film. This method can provide a thin film on the surface of which and in the neighborhood of the surface domains of the polymer of the fluorine-containing radical-polymerizable monomer are distributed in a higher density than in the inside of the film. In these domains, fluorine containing portions such as perfluoroalkyl groups are present. Such a state (that is, morphology) is favorable for exhibiting good water repellency, oil repellency and water resistance. Monomers particularly preferably used for forming such fluorine-containing polymer domains in charge of these properties are fluorine-containing acrylate or methacrylate having a sulfon-amide group. It is also effective to use an organic solvent in forming thin film.

In the present invention, the expression that "domains of the fluorine-containing polymer are distributed on the surface and in the inside of the cured product of thermosetting resin" refers to a morphology wherein domains of various shapes of the fluorine-containing polymer are present on the surface and in the inside of the cured product of thermosetting resin without dissolving into the cured product. More specifically, it generically refers to those states which range from one wherein the fluorine-containing polymer is uniformly dispersed as fine particles in the cured product of thermosetting resin to one wherein uniform or non-uniform particles or granules of indefinite shape of the fluorine-containing polymer are distributed on the surface and near the surface of the cured product of thermosetting resin in higher density than in the inside thereof. It also includes a state wherein the fluorine-containing polymer bleeds to the surface of the thermosetting resin and resultantly the surface becomes substantially covered by the fluorine-containing polymer layer.

The coating film forming composition according to the present invention is then explained below. The coating film forming composition according to the present invention refers to a composition comprising (A) a compound mentioned above having an addition-polymerizable group and capable of yielding a thermoplastic polymer by its polymerization and (B) a thermosetting resin, said compound (A) being uniformly dissolved or dispersed in the resin (B). A composition wherein the above-mentioned fluorine-containing radical-polymerizable monomer is uniformly dispersed as the component (A) in the above-mentioned thermosetting resin (B) can be favorably used as a composition for forming coating film having a good water repellency.

The composition for forming coating film having a good water repellency may be incorporated, if necessary and desired, with various ingredients, to be used as a coating material. For example, dyes and pigments can be used as colorants. Examples of the colorants include inorganic pigments such as titanium oxide, zinc flower, carbon black, iron black, copper chrome black, copper iron manganese black, red iron oxide, zinc iron brown, cadmium red, chrome vermillion, chrome yellow, cadmium yellow, zinc chromate, cobalt green, chrome green, cobalt chrome green, chrome oxide green, viridian cobalt green, Prussian blue, ultramarine blue, manganese violet, white carbon, silica white, alumina white, gypsum, precipitated barium

sulfate, and precipitated barium carbonate; and organic pigments of $\beta$-naphthol type, $\beta$-oxynaphthoic acid type, naphthol NAS type, pyrazolone type, acetoacetic ester type, phthalocyanine type, anthraquinone type, indigo type, perylene type, berynone type, dioxazine type, quinacridon type, isoinvolin type, metal complex acid type, fluorpin type and quinophthalone type.

Depending on the use and purpose of the coating material, particulate substances, such as talc, mica, calcium carbonate, hydrated alumina, silicon carbide, metal powders, etc., and whiskers of silicon carbide, aluminum borate, etc. may be added to the coating material. The coating material may further be incorporated with various ingredients conventional to coating materials, which include solvents, viscosity controlling agents, dispersants, antifoaming agents, ultraviolet absorbers, antioxidants, photo-stabilizers, and coupling agents.

The process for producing the water repellent coating film forming composition and coating material according to the present invention is illustrated below. When the thermosetting resin which is to constitute the matrix is, for example, an epoxy resin, first an epoxy resin composition containing an epoxy curing agent component is prepared. Then, a fluoroalkyl group-containing radical-polymerizable monomer containing polymerization initiator component is prepared and uniformly mixed with the epoxy resin composition in the presence of a dispersion stabilizer by such means as mechanical stirring, etc. Thus, a water repellent coating film forming composition containing a fluoroalkyl group-containing radical-polymerizable monomer uniformly dispersed therein is obtained. The polymerization initiator component may also be directly added to the epoxy resin.

Then, various pigments and additives are added according to the intended purposes of the coating material. It is also possible to add various ingredients conventional to coating materials in the above-mentioned step of stirring.

The water repellent coating film forming composition and coating material of the present invention can be coated or various substrates by using conventional means or techniques, such as spray coating, brush coating, heel coater, flow coater and bar coater. Subsequently to the coating, the coated film can be baked under predetermined conditions to complete the formation of the coating film. The method of baking is not particularly limited. By polymerizing also the fluoroalkyl group-containing radical-polymerizable monomer in the baking step, a coating film excellent in water repellency and staining resistance can be formed. In the baking of thin film, some component materials, such as the fluoroalkyl-group containing radical-polymerizable monomer, may tend to vaporize off. Therefore, to obtain a highly water repellent surface with good reproducibility, difficultly vaporizable materials are to be selected properly for such components as fluoroalkyl group-containing radical-polymerizable monomer. For example, fluoroalkyl group-containing acrylates or methacrylates having a sulfonamide group are suitably used as a difficultly vaporizable fluoroalkyl group-containing radical-polymerizable monomer.

After the coating film has been formed, the surface of the coating film is preferably polished. A stable water repellency can be obtained by polishing.

Then, description is given of the resin composition for sealing semiconductor elements according to the present invention. The resin composition for sealing semiconductor elements according to the present invention is a composition which comprises (A) the above-mentioned compound having an addition-polymerizable group and capable of yielding a thermoplastic resin by its polymerization and (B) the above-mentioned thermosetting resin, said compound (A) being uniformly dissolved or dispersed in the resin (B). A composition comprising the thermosetting resin (B) and the fluorine-containing radical-polymerizable monomer uniformly dispersed therein as the component (A) is suitably used as a water resistant resin composition for sealing semiconductor elements.

The sealing resin composition may be incorporated with inorganic fillers. Examples of the inorganic filler include silica, alumina, titanium white, aluminum hydroxide and glass fiber. Silica and alumina are particularly preferred. The amount of the filler which can be added may be increased by using a mixture of materials of different shapes (e.g., spheres or crushed powders) or different sizes. The compounding ratio of the inorganic filler in the resin composition used for sealing semiconductor elements is preferably in the range of 10-90% by weight based on the total resin composition, from the viewpoint of operability and performance.

The sealing resin composition may further be incorporated, depending on necessity, with mold releasing agents such as natural wax, synthetic wax, higher fatty acids and their metal salts, and paraffin, colorants such as carbon black, and surface treating agents such as silane coupling agents. Further, flame retarders such as antimony trioxide, phosphorus compounds and brominated epoxy resins may be added with advantage. Further, to attain a lowered internal stress, various elastomers such as polybutadiene, butadiene-acrylonitrile copolymer, silicone rubber, silicone oil, etc. may be added. Particularly preferred among them are elastomers having a group reactive with an epoxy group in the molecule.

The process for producing the sealing resin composition of the present invention is described below. An epoxy resin mixed with a curing agent component and a fluorine-containing radical-polymerizable monomer mixed with a polymerization initiator component are prepared, and the two are uniformly mixed together with a desired amount of dispersing stabilizer by means of mechanical stirring or the like, to obtain an epoxy resin composition containing liquid droplets formed of the fluorine-containing radical-polymerizable monomer uniformly dispersed therein. The polymerization initiator may also be added directly to the epoxy resin. The intended resin composition for sealing semiconductor elements can be obtained by further adding predetermined additives or the like to the composition, followed by kneading.

Preparation of resin sealed semiconductor devices using the sealing resin composition according to the present invention can be performed by such means as transfer molding, compression molding, injection molding and, further, casting and dipping.

DESCRIPTION OF THE PREFERRED EMBODIMENTS

The present invention is described in more detail with reference to the following Examples, but the invention is in no way limited thereto. In the Examples, the fracture toughness test was conducted by the three-point bending test according to ASTM-E399 and the bending test by the three-point bending test according to JIS K-7203, respectively, on an AUTO GRAPH IS 10T (an automatic tester, mfd. by Shimadzu Corp.). The glass transition temperature (Tg) was determined from the inflection point of the thermal expansion curve by using a thermoanalytical apparatus (DT-30, mfd. by Shimadzu Corp.). The dielectric constant and the dielectric loss tangent at room temperature were determined by using a 4275A Multi-Frequency LCR meter (mfd. by YOKOGAWA-HEWLETT PACKARD), the value of the dielectric constant being calculated from the electrostatic capacity of the sample.

Example 1

Azobisisobutyronitrile (mfd. by Wako Pure Chemical Industries, Ltd.) in an amount of 0.03g was added and dissolved into 30g of a styrene monomer (mfd. by Wako Pure Chemical Industries, Ltd.). Then, 100g of a bisphenol A type epoxy resin (Sumiepoxy ELA 128, a trade name, mfd. by Sumitomo Chemical Co., Ltd.), 85g of an alicyclic acid anhydride type curing agent (HN 5500, a trade name, mfd. by Hitachi Chemical Co., Ltd.) and 0.5g of a tertiary amine type curing agent (Sumicure D, a trade name, mfd. by Sumitomo Chemical Co., Ltd., 2,4,6-tris(dimethylaminomethyl)phenol were added to the solution, and the resulting mixture was defoamed at room temperature to obtain a composition in the form of uniform solution. The composition was placed between two glass plates with gaps of 7 mm and 2 mm, and cured and polymerized in a hot air oven at 100 °C for 3 hours, at 120 °C for 3 hours and then at 150 °C for 3 hours to obtain a resin plate. Table 1 shows the physical and mechanical properties of the resin plate thus obtained.

Under the above-mentioned reaction conditions, the polymerization completion time of the styrene monomer and the gelation time of the epoxy resin, Sumiepoxy ELA 128, were both about 45 minutes. This was examined as follows. Thus, the polymerization completion time of the styrene monomer was determined from the change in absorption at 1630 $cm^{-1}$ attributable to the double bond of styrene monomer by placing the same composition as described above between two silicon wafers and tracing the change of the system by IR analysis at 100 °C. The gelation time of the epoxy resin, Sumiepoxy ELA 128, was determined by measuring the change of viscosity of the same composition as above at 100 °C using a REOMAT 115A® (an apparatus mfd. by Contraves Corp.).

Example 2

Into 10g of a styrene monomer (mfd. by Wako Pure Chemical Industries, Ltd.) and 20g of a styrene macromonomer having methacrylate at one terminal (AS6, a trade name, mfd. by TOAGOSEI CHEMICAL IND. CO., LTD.) was added and dissolved 0.03g of azobisisobutyronitrile (mfd. by Wako Pure Chemical Industries, Ltd.). Then, 100g of a bisphenol A type epoxy resin (Sumiepoxy ELA 128, a trade name, mfd. by Sumitomo Chemical Co., Ltd.), 85g of an alicyclic acid anhydride type curing agent (HN 5500, a trade name, mfd. by Hitachi Chemical Co., Ltd.) and 0.5g of a tertiary amine type curing agent (Sumicure D, a trade name, mfd. by Sumitomo Chemical Co., Ltd., 2,4,6-tris(dimethylaminomethyl)phenol were added to the solution, mixed, and the resulting mixture was defoamed at room temperature to obtain a composition in the form of uniform solution. The composition was placed between two glass plates with gaps of 7 mm and 2 mm, and cured in a hot air oven at 80 °C for 3 hours, at 120 °C for 3 hours and then at 150 °C for 3 hours to obtain a resin plate. Table 1 shows the physical and mechanical properties of the resin plate.

Example 3

Into 3.76g of a styrene monomer (mfd. by Wako Pure Chemical Industries, Ltd.) were added and dissolved 6.25g of N-phenylmaleimide (mfd. by Wako Pure Chemical Industries, Ltd.) and 0.01g of azobisisobutyronitrile (mfd. by Wako Pure Chemical Industries, Ltd.). Then 100g of a bisphenol A type epoxy resin (Sumiepoxy ELA 128, a trade name, mfd. by Sumitomo Chemical Co., Ltd.), 85g of an alicyclic acid anhydride type curing agent (HN 5500, a trade name, mfd. by Hitachi Chemical Co., Ltd.) and 0.5g of a tertiary amine type curing agent (Sumicure D, a trade name, mfd. by Sumitomo Chemical Co., Ltd., 2,4,6-tris(dimethylaminomethyl)phenol were added to the solution, mixed, and the mixture was defoamed at room temperature to obtain a composition in the form of uniform solution. The composition was placed between two glass plates with gaps of 7 mm and 2 mm and cured in a hot air oven at 80 °C for 3 hours, at 120 °C for 3 hours and then at 150 °C for 3 hours to obtain a resin plate. Table 1 shows the physical and mechanical properties of the resin plate.

Example 4

Into 30g of a methyl methacrylate monomer (mfd. by Wako Pure Chemical Industries, Ltd.) was added and dissolved 0.03g of azobisisobutyronitrile (mfd. by Wako Pure Chemical Industries, Ltd.). Then, 100g of a bisphenol A type epoxy resin (Sumiepoxy ELA 128, a trade name, mfd. by Sumitomo Chemical Co., Ltd.), 85g of an alicyclic acid anhydride type curing agent (HN 5500, a trade name, mfd. by Hitachi Chemical Co., Ltd.) and 0.5g of a tertiary amine type curing agent (Sumicure D, a trade name, mfd. by Sumitomo Chemical Co., Ltd., 2,4,6-tris(dimethylaminomethyl)phenol were added to the solution, mixed, and the mixture was defoamed at room temperature to obtain a composition in the form of uniform solution. The composition was placed between two glass plates with gaps of 7 mm and 2 mm, and cured in a hot air oven at 80 °C for 3 hours, at 120 °C for 3 hours and then at 150 °C for 3 hours to obtain a resin plate. Table 1 shows the physical and mechanical properties of the resin plate.

Example 5

Into 20g of a styrene monomer (mfd. by Wako Pure Chemical Industries, Ltd.) were added and dissolved 10g of glycidyl methacrylate (mfd. by Wako Pure Chemical Industries, Ltd.) and 0.03g of azobisisobutyronitrile (mfd. by Wako Pure Chemical Industries, Ltd.). Then, 100g of a bisphenol A type epoxy resin (Sumiepoxy ELA 128, a trade name, mfd. by Sumitomo Chemical Co., Ltd.), 85g of an alicyclic acid anhydride type curing agent (HN 5500, a trade name, mfd. by Hitachi Chemical Co.) and 0.5g of a tertiary amine type curing agent (Sumicure D, a trade name, mfd. by Sumitomo Chemical Co., Ltd., 2,4,6-tris(dimethylaminomethyl)phenol were added to the solution, mixed, and the mixture was defoamed at room temperature to obtain a composition in the form of uniform solution. The solution was placed between two glass plates with gaps of 7 mm and 2 mm, and cured in a hot air oven at 80 °C for 3 hours, at 120 °C for 3 hours and then at 150 °C for 3 hours to obtain a resin plate. Table 1 shows the physical and mechanical properties of the resin plate.

Comparative Example 1

A mixture of 100g of Sumiepoxy ELA 128 (a trade name, mfd. by Sumitomo Chemical Co., Ltd.), 85g of an alicyclic acid anhydride type curing agent (HN 5500, a trade name, mfd. by Hitachi Chemical Co., Ltd.), and 0.5g of a tertiary amine type curing agent (Sumicure D, a trade name, mfd. by Sumitomo Chemical Co., Ltd., 2,4,6-tris(dimethylaminomethyl)phenol was defoamed at room temperature to obtain a composition. The composition was placed between two glass plates with gaps 7 mm and 2 mm, and cured in a hot air oven at 120 °C for 0.5 hour and then at 150 °C for 3 hours to obtain a resin plate. Table 1 shows the physical and mechanical properties of the resin plate.

Comparative Example 2

Thirty grams of a commercially available polystyrene resin (ESBLITE®, a trade name, mfd. by Sumitomo Chemical Co., Ltd.) and 100g of Sumiepoxy ELA 128 (a trade name, mfd. by Sumitomo Chemical Co., Ltd.) were stirred in a beaker at 150 °C for 1 hour in an attempt to blend the two components, but the blending was unsuccessful.

Comparative Example 3

Thirty grams of ESBLITE® (a trade name, mfd. by Sumitomo Chemical Co., Ltd.), 100g of Sumiepoxy ELA 128 (a trade name, mfd. by Sumitomo Chemical Co., Ltd.) and 300 mℓ of methylene chloride (mfd. by Wako Pure Chemical Industries, Ltd.) were stirred in a beaker to prepare a uniform solution. When methylene chloride was removed from the solution by drying it in a vacuum oven at 120°C for 6 hours, the remaining mixture again separated into two phases-polystyrene resin and epoxy resin. Thus, blending was impossible.

Comparative Example 4

In a 500-mℓ flask equipped with a cooling tube, stirrer and thermometer were placed 100g of Sumiepoxy ELA 128 (a trade name, mfd. by Sumitomo Chemical Co., Ltd.), 30g of a styrene monomer (mfd. by Wako Pure Chemical Industries, Ltd.) and 0.6g of azobisisobutyronitrile (mfd. by Wako Pure Chemical Industries, Ltd.), and the styrene monomer was polymerized under nitrogen stream at 90°C for 3 hours. To 130.6g of the resulting mixture containing styrene polymer were added 85g of an alicyclic acid anhydride type curing agent (HN 5500, a trade name, mfd. by Hitachi Chemical Co., Ltd.) and 0.5g of a tertiary amine type curing agent (Sumicure D, a trade name, mfd. by Sumitomo Chemical Co., Ltd., 2,4,6-tris(dimethylaminomethyl)phenol, mixed, and the resulting mixture was defoamed at room temperature to obtain a composition. The composition was placed between two glass plates with gaps of 7 mm and 2 mm, and baked in a hot air oven at 80°C for 3 hours, at 120°C for 3 hours and then at 150°C for 3 hours to obtain a resin plate. Table 1 shows the physical and mechanical properties of the resin plate.

Table 1

| | | Example 1 | Example 2 | Example 3 | Example 4 | Example 5 | Comparative Example 1 | Comparative Example 2 |
|---|---|---|---|---|---|---|---|---|
| Fracture toughness | $MN/m^{1.5}$ | 0.86 | 0.83 | 0.70 | 0.65 | 0.65 | 0.50 | 0.08 |
| Dielectric constant | | 3.12 | 3.12 | 3.18 | 3.28 | 3.20 | 3.30 | 3.25 |
| tan δ | | 0.012 | 0.013 | 0.031 | 0.016 | 0.012 | 0.020 | 0.020 |
| Flexural strength | $kg/mm^2$ | 12.5 | 14.2 | 14.5 | 13.5 | 13.9 | 14.1 | 12.0 |
| Flexural modulus | $kg/mm^2$ | 325 | 330 | 370 | 333 | 412 | 320 | 320 |
| Tg | °C | 120 | 125 | 129 | 126 | 125 | 126 | 120 |

Table 1 clearly shows that, according to the present invention, an excellent toughness and low dielectric constant not attainable previously can be obtained without impairing good heat resistance and other advantages inherent to epoxy resin.

Referential Example 1

Synthesis of 2-(perflurobutyl)ethyl α-fluoroacrylate

2-(Perfluorobutyl)ethyl α-fluoroacrylate used in the following Examples was synthesized by reacting α-fluoroacrylic acid chloride and 2-(perfluorobutyl)ethyl alcohol (mfd. by FLUORO CHEMICAL CO., LTD.).

In a 500-mℓ flask were placed 1.1 moles of 2-(perfluorobutyl)ethyl alcohol, 1.0 mole of triethylamine and 0.01 mole of hydroquinone, and α-fluoroacrylic acid chloride was gradually dropped thereto from a dropping funnel while cooling with ice water. After the whole of the chloride had been dropped, the reaction mixture was washed first with ice water, then with 5% $NaHCO_3$ solution in ice water and again with ice water. Then hydroquinone was added thereto and the mixture was distilled under reduced pressure to obtain the intended monomer in 65% yield.

Example 6

To 10g of 2-(perfluorobutyl)ethyl α-fluoroacrylate was added 0.01g of azobisisobutyronitrile (mfd. by Wako Pure Chemical Industries Ltd.) and heated to form a solution. Then 0.1g of FLUORAD® FC-430 (the same as described before) was added thereto and stirred. To 3.0g of the resulting monomer mixture was added 10.0g of an epoxy resin composition obtained by mixing 10.0 parts by weight of a bisphenol A type epoxy resin (Sumiepoxy ELA 128, a trade name, mfd. by Sumitomo Chemical Co., Ltd.), 8.5 parts by weight of an alicyclic acid anhydride type curing agent (HN 5500, a trade name, mfd. by Hitachi Chemical Co., Ltd., methylhexahydrophthalic anhydride) and 0.1 part by weight of a tertiary amine type curing agent (Sumicure D, a trade name, mfd. by Sumitomo Chemical Co., Ltd., 2,4,6-tris(dimethylaminoethyl)phenol, and the resulting mixture was stirred at 2000 rpm and then defoamed at 50°C to obtain a resin composition. The resin composition was placed between two glass plates with a gap of 2 mm, and baked by standing in a hot air oven at 120°C for 2 hours to obtain a resin plate having a uniform surface. The resin plate thus obtained was polished and used for evaluation. The SEM photographic observation of the surface cut out from the resin plate revealed that poly-2-(perfluorobutyl)ethyl α-fluoroacrylate particles dispersed uniformly all over the surface with a number average particle diameter of 4.3 µm. The resin plate showed a good properties of a contact angle to water of 133° at a surface roughness (Rmax) of 2.0 µm and a flexural modulus of 282 kg/mm$^2$.

Example 7

To 10g of 2-(perfluorooctyl)ethyl acrylate was added 0.01g of azoisobutyronitrile (mfd. by Wako Pure Chemical Industries, Ltd.) and heated to form a solution. Thereafter 0.1g of FLUORAD® FC-430 was added thereto and stirred.

To 3.0g of the monomer mixture thus obtained was added 10.0g of an epoxy resin composition comprising 10.0 parts by weight of Sumiepoxy ELA 128 (mfd. by Sumitomo Chemical Co., Ltd.), 8.5 parts by weight of an alicyclic acid anhydride type curing agent (HN 5500, mfd. by Hitachi Chemical Co., Ltd.) and 0.1 part by weight of Sumicure D (mfd. by Sumitomo Chemical Co., Ltd.), the resulting mixture was stirred at 2000 ppm and defoamed in a vacuum hot oven at 50°C to obtain a resin composition. The resin composition was placed between two glass plates with a gap of 2 mm and cured by standing in a hot air oven at 120°C for 2 hours to obtain a resin plate having a uniform surface. The resin plate obtained was polished and used for evaluation.

The SEM photographic observation of the surface of a test piece cut out from the resin plate revealed that poly[2-(perfluorooctyl)ethyl acrylate] particles dispersed uniformly all over the surface with a number average particle diameter of 4.1 µm.

The resin plate showed good properties of a contact angle to water of 131° at a surface roughness (Rmax) of 2.0 µm and a flexural modulus of 260 kg/mm$^2$.

Example 8

To 10.0g of 2-(perfluorooctyl)ethyl acrylate was added 0.01g of azoisobutyronitrile (mfd. by Wako Pure Chemical Industries, Ltd.) and heated to form a solution. Then 0.1g of FLUORAD® FC-430 was added thereto and stirred. To 3.0g of the monomer mixture thus obtained was added 10.0g of an epoxy resin composition comprising 10.0 parts by weight of Sumiepoxy ELA 128 (mfd. by Sumitomo Chemical Co., Ltd.), 8.5 parts by weight of an alicyclic acid anhydride type curing agent (HN 5500, mfd. by Hitachi

Chemical Co., Ltd.) and 0.1 part by weight of Sumicure D (mfd. by Sumitomo Chemical Co., Ltd.), the mixture was stirred at 2000 rpm and defoamed at 50 °C to form a resin composition. The resin composition was placed between two glass plates with a gap of 2 mm and cured by standing in a hot air oven at 120 °C for 2 hours to obtain a resin plate having a uniform surface. The resin plate obtained was polished and used for evaluation.

The SEM photographic observation of a test piece cut out from the resin plate revealed that poly[2-(perfluorooctyl)ethyl acrylate] particles dispersed uniformly all over the surface with a number average particle diameter of 5.5 µm. The resin plate showed good properties of a contact angle to water of 129° at a surface roughness (Rmax) of 2.0 µm and a flexural modulus of 271 kg/mm$^2$.

Example 9

To 10.0g of 2-(perfluorooctyl)ethyl acrylate was added 0.01g of azobisisobutyronitrile (mfd. by Wako Pure Chemical Industries, Ltd.) and heated to form a solution. Thereafter 0.1g of FLUORAD® FC-430 was added thereto and stirred.

To 3.0g of the monomer mixture thus obtained was added 5.3g of Sumiepoxy ELA 128 (mfd. by Sumitomo Chemical Co., Ltd.) and the resulting mixture was allowed to stand at room temperature for one week. No change was observed in the mixture after standing. Then, 4.5 g of an alicyclic acid anhydride type curing agent (HN 5500, mfd. by Hitachi Chemical Co., Ltd.) and 0.053g of Sumicure D (mfd. by Sumitomo Chemical Co., Ltd.) were added thereto, and the resulting mixture was stirred at 2000 ppm and defoamed at 50 °C to obtain a resin composition. The resin composition was placed between two glass plates with a gap of 2 mm and cured by standing in a hot air oven at 120 °C for 2 hours to obtain a resin plate having a uniform surface. The resin plate obtained was polished and used for evaluation.

The SEM photographic observation of a test piece cut out from the resin plate revealed that poly[2-(perfluorooctyl)ethyl acrylate] particles dispersed uniformly all over the surface with a number average particle diameter of 4.6 µm. The resin plate showed good properties of a contact angle to water of 130° at a surface roughness (Rmax) of 2.0 µm and a flexural modulus of 263 kg/mm$^2$. Thus, it has become apparent that the uncured resin composition is excellent also in storage stability.

Example 10

To 10.0g of an epoxy resin composition comprising 10.0 parts by weight of Sumiepoxy ELA 128 (mfd. by Sumitomo Chemical Co., Ltd.), 8.5 parts by weight of an alicyclic acid anhydride type curing agent (HN 5500, mfd. by Hitachi Chemical Co., Ltd.) and 0.1 part by weight of Sumicure D (mfd. by Sumitomo Chemical Co., Ltd.) were added 0.1g of FLUORAD® FC-430 (the same as described above), 3.0g of a perfluoroacrylate monomer which has a sulfonamide group and is solid at room temperature (F544, a trade name, mfd. by DAINIPPON INK & CHEMICALS, INC., N-methyl-N-(β-acryloxyethyl)-perfluorooctanesulfonamide) and 0.003g of azobisisobutyronitrile (mfd. by Wako Pure Chemical Industries, Ltd.). The resulting mixture was diluted with ethyl acetate to a solid concentration of 68% and stirred to obtain a composition for forming thin film.

The composition was coated on the surface of a glass substrate which had been washed by using a detergent, so as to give a thickness after cure of about 50 µm, and cured in a hot air oven at 120 °C for 2 hours to form a thin film. The thin film showed an excellent water repellency of a contact angle to water of 109° at a surface roughness (Rmax) of 0.3 µm. When the film surface was polished, the contact angle lowered to 100° at a surface roughness of 2.3 µm as compared with the value before polishing.

The metallurgical microphotograph of the surface revealed that the thin film had a surface morphology wherein poly-N-methyl-N-(β-acryloxyethyl)perfluorooctanesulfonamide particles dispersed uniformly with an average particle diameter of 2 µm.

Example 11

A master batch was prepared by kneading with a three roll mill 10.0g of Sumiepoxy ELA 128 (mfd. by Sumitomo Chemical Co., Ltd.) and 10.0g of a perfluoroacrylate monomer which has a sulfonamide group and is solid at room temperature (F544, a trade name, mfd. by DAINIPPON INK & CHEMICALS, INC., N-methyl-N-(β-acryloxyethyl)perfluorooctanesulfonamide).

Then, 6g of the master batch, 2.4g of Sumiepoxy ELA 128®, 4.5g of an alicyclic acid anhydride type curing agent (HN 5500, mfd. by Hitachi Chemical Co., Ltd.), 0.1g of Sumicure D®, 0.1g of FLUORAD® FC-430 and 0.3g of a 1% acetone solution of azobisisobutyronitrile were mixed and then stirred by using a

Homomixer (a homogenizer) at 3000 rpm until the mixture became uniform, to form a composition for forming thin film.

The composition was coated on the surface of a glass substrate which had been washed by using a detergent with a bar coater so as to give a thickness of 100 μm, and cured in a hot air oven at 120 °C for 2 hours to form a thin film. The thin film showed an excellent water repellency of a contact angle to water of 107° at a surface roughness (Rmax) of 0.3 μm.

Comparative Example 5

Similar measurements were made with a commercially available PTFE sheet. Resultantly, when the surface roughness (Rmax) was 2.0 μm the contact angle was 110°, and when the surface roughness (Rmax) was 0.3 μm the contact angle to water was 96° and the modulus of elasticity was 62 $kg/mm^2$.

Comparative Example 6

Similar measurements were made with a cured product obtained by curing Sumiepoxy ELA 128® (mfd. by Sumitomo Chemical Co., Ltd.) by using an alicyclic acid anhydride type curing agent (HN 5500, mfd. by Hitachi Chemical Co., Ltd.). Resultantly, the contact angle to water was 100° at a surface roughness (Rmax) of 2.0 μm, and the contact angle to water was 72° at a surface roughness (Rmax) of 0.3 μm and the modulus of elasticity was 338 $kg/mm^2$.

Comparative Example 7

A mixture of 3.0g of a commercially available PTFE particle (LUBLON® L5, a trade name, mfd. by Daikin Industries, Ltd.), 10.0g of an epoxy resin comprising 10.0 parts by weight of Sumiepoxy ELA 128 (mfd. by Sumitomo Chemical Co., Ltd.), 8.5 parts by weight of an alicyclic acid anhydride type curing agent (HN 5500, mfd. by Hitachi Chemical Co., Ltd.) and 0.1 part by weight of Sumicure-D (mfd. by Sumitomo Chemical Co., Ltd.) and 0.1g of FLUORAD® FC-430 was stirred. However, since the resin system was of a high viscosity, it was poor in operability and was difficult to defoam, so that a resin plate free from voids could not be prepared therefrom.

As is apparent from Examples 6-11 and Comparative Examples 5-7, the thermosetting resin composition of the present invention can be applied to various uses as a water repellent and oil repellent material. For example, it is suitably used for surface materials of rolls of printing apparatuses and the like, water repellent coating materials for electric and electronic instruments, and water repellent paint.

Example 12

An epoxy resin composition comprising 100 parts by weight of an epoxy resin (Sumiepoxy ELA 128, mfd. by Sumitomo Chemical Co., Ltd.), 85 parts by weight of an alicyclic acid anhydride type curing agent (HN 5500, mfd. by Hitachi Chemical Co., Ltd.) and 1 part by weight of Sumicure D® (mfd. by Sumitomo Chemical Co., Ltd.) was prepared in an amount of 90g. Then, 0.01g of azobisisobutyronitrile (mfd. by Wako Pure Chemical Industries, Ltd.) was added to 10g of β-(perfluorooctyl)ethyl acrylate (LIGHTACRYLATE® FA-108, a trade name, mfd. by KYOEISHA KAGAKU KOGYO CO., LTD.) and dissolved by heating at 40 °C to form a material for polymerization of fluorine-containing polymer. Thereafter, 10g of the material for polymerization of fluorine-containing polymer was added to 90g of the epoxy resin composition prepared above. Further, 1.0g of FLUORAD® FC 430 was added thereto as a dispersion stabilizer, and the resulting mixture was stirred at 2000 rpm for 3 minutes to obtain the resin composition for sealing semiconductor elements of the present invention. The resin composition was a uniform, milk white liquid having a viscosity at 25 °C of 1200 centipoises.

Examples 13 and 14

Resin compositions of the present invention were prepared in exactly the same manner as in Example 1 except that the mixing ratio was changed. Both of the compositions were a uniform, milk white liquid similar to that in Example 12.

Examples 15-17

The respective resin compositions obtained in Examples 12-14 were incorporated with alumina particles (mfd. by Sumitomo Chemical Co., Ltd., trade name: AKP-15, average particle diameter : 0.7 $\mu$m) as a filler, a silane coupling agent (mfd. by TORAY, DOW-CORNING SILICONE CO., LTD., trade name : SH-6040, $\gamma$-glycidoxytrimethoxysilane) as a surface treating agent for the alumina particle, and carbon black in a ratio shown in Table 2, and blended by stirring in an automatic mortar for 1 hour to obtain respective resin compositions for sealing semiconductor elements according to the present invention. The sealing resin composition thus obtained heated to 100°C was cast into a mold of 3 mm × 100 mm × 100 mm in dimension and cured at 100°C for 2 hours and then at 150°C for 5 hours to obtain a resin plate. Test pieces were cut out in predetermined size from the resin plate and used for property evaluation. The results of evaluation are shown in Table 2.

Comparative Example 8

A prior art sealing epoxy resin composition containing no fluorine atom-containing radical-polymerizable monomer was prepared in a compounding ratio shown in Table 2, and subjected to the same property evaluation as in Examples 15-17. The results of evaluation are shown in Table 2.

Table 2

| | | Comparative Example 8 | Example 15 | Example 16 | Example 17 |
|---|---|---|---|---|---|
| Sealing agent composition *1) | Epoxy resin *2) | 100 | 90 | 80 | 70 |
| | Fluorine-containing monomer *3) | - | 10 | 20 | 30 |
| | AIBN *4) | - | 0.01 | 0.02 | 0.03 |
| | Dispersion stabilizer | - | 1.0 | ← | ← |
| | Alumina particle | 150 | ← | ← | ← |
| | Silane coupling agent | 1.0 | ← | ← | ← |
| | Carbon black | 1.0 | ← | ← | ← |
| Property | Gelation time (sec) | 133 | 141 | 140 | 135 |
| | Viscosity (poise) | 920 | 880 | 850 | 980 |
| | Glass transition temp. (°C) | 151 | 155 | 152 | 153 |
| | Moisture absorption (wt%) | 0.65 | 0.53 | 0.45 | 0.34 |

Note:
*1) Part by weight
*2) A composition comprising Sumiepoxy ELA 128 (100 parts by weight), HN 5500 (85 parts by weight) and Sumicure D 30 (1 part by weight)
*3) β-(Perfluorooctyl)ethyl acrylate
*4) Azobisisobutyronitrile
Symbols ← signify that the value is the same as that in the left side column.

The properties shown in Table 2 were evaluated in the following manner.

(1) Gelation time : A 0.5g portion of the mixture of resin composition obtained in Examples and Comparative Examples was placed in a concave part of a hot plate of 150 °C and the time which elapsed till gelation was measured.

(2) Viscosity : The viscosity was measured by using a rotary viscometer (Type: REOMAT® 115A, mfd. by Contraves Co., ltd.) at 25 °C and a shear rate of 20 $sec^{-1}$.

(3) Glass transition point : This was determined by using a thermomechanical testing apparatus (type: DT-30, mfd. by Shimadzu Corp.).

(4) Moisture absorption : Water absorption after standing at a temperature of 85 °C and a humidity of 85% for 72 hours was determined by using a thermohygrostat (type: AGX-326, mfd. by Advantech Co., Ltd.).

It has been revealed that the resin composition of the present invention can have an improved water resistance without deteriorating good heat resistance and ease of handling inherent to epoxy resin, and hence is highly useful for sealing semiconductors.

Effect of the Invention

The process for producing a cured resin product according to the present invention is excellent in operability and productivity in the process step. Thus, since a compound having an addition-polymerizable group is mixed into uncured thermosetting resin according to the process of the present invention, particularly when a liquid addition-polymerizable compound is used, the viscosity of the system is reduced, which leads to good handling property and processability and good operability. Further, according to the process of the present invention, a cured product comprising a thermosetting resin and a thermoplastic resin incorporated into the former resin can be obtained in one step, so that the process is excellent in productivity.

According to the process of the present invention, a cured resin product can be obtained which is improved in those properties which are considered unsatisfactory in cured products of prior thermosetting resins, for example, toughness, dielectric properties, etc.

The cured resin product excellent in mechanical properties, particularly toughness, and dielectric properties obtained according to the process of the present invention is highly valuable as molding materials and electronic materials.

According to the process of the present invention, it becomes possible to introduce a thermoplastic resin into a thermosetting resin even with resin combinations for which such introduction was not attainable in the prior art for reasons of compatibility.

By proper selection of the combination of an addition-polymerizable compound and a thermosetting resin, cured resin products with various functions can be produced. Thus, the process of the present invention is of great industrial value.

The cured resin product of the present invention which is characterized in that domains of fluorine-containing polymer are distributed on the surface and in the inside of the cured product of thermosetting resin and the cured resin product of the present invention which is characterized in that fine particles of fluorine-containing polymer are uniformly dispersed in the cured product of thermosetting resin are excellent in mechanical properties and thermal properties and maintain stable and high degree water repellency, oil repellency and water resistance over a long period. Therefore, when these cured resin products are used for rolls of printing apparatuses or surface materials for business machines, for example, they are greatly effective in preventing staining due to printing ink and the like. When they are used for coating materials for electric and electronic instruments, they are highly effective in protecting them from water.

According to the process for producing a cured product of thermosetting resin according to the present invention, a fluorine-containing radical-polymerizable monomer, e.g. a polymerizable monomer containing a perfluoroalkyl group, can be dispersed or dissolved stably into a thermosetting resin composition, so that a cured resin product can be obtained in which, also after curing of the thermosetting resin, the polymer of the perfluoroalkyl group-containing polymerizable monomer are uniformly distributed or dispersed in the cured product of the thermosetting resin as fine particles having a narrow distribution of particle size of 10 μm or less expressed in terms of number average.

According to the process for producing a cured product of thermosetting resin of the present invention, when the thermosetting resin composition of the present invention is coated on a substrate and then cured to form a thin film, a film can be obtained in which domains of the polymer of a fluorine-containing radical-polymerizable monomer, e.g., a perfluoroalkyl group-containing polymerizable monomer, are distributed on and near the surface of the film in higher density than in the inside. Such a morphology is favorable for exhibiting the effects mentioned above.

Further, the thermosetting resin composition treated in the process of the present invention, in which a fluorine-containing radical-polymerizable monomer are uniformly dispersed or dissolved in thermosetting resin, is liquid and hence is excellent in handling property and processability.

By using the coating film forming composition or coating material according to the present invention, a coating film which has a good adhesiveness to substrates, is excellent in water repellency and is easy to remove staining due to ink or the like can be formed.

The resin composition for sealing semiconductor elements according to the present invention is equal to prior sealing epoxy resin composition in curing characteristic (gelation time), handling property (viscosity) and heat resistance (glass transition temperature) and can provide resin sealed semiconductor devices excellent in toughness, dielectric property and water resistance.

## Claims

1. A process for producing a cured resin product which comprises mixing (A) a compound having an addition-polymerizable group and capable of yielding a thermoplastic resin by its polymerization and (B) a thermosetting resin to form a uniform solution or dispersion and curing the component (B) while simultaneously polymerizing the component (A).

2. The process for producing a cured resin product according to Claim 1 wherein the component (A) is a compound having a polymerizable carbon-carbon double bond.

3. The process for producing a cured resin product according to Claim 1 wherein the component (A) is a monomer having a polymerizable carbon-carbon double bond represented by the following formula (1) and/or formula (2) or an oligomer having a polymerizable carbon-carbon double bond at one terminal represented by the formula (3):

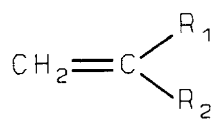 (1),

wherein $R_1$ is a hydrogen atom, a methyl group or a chlorine atom; and $R_2$ is an alkyl group having 3-18 carbon atoms, a 6-membered ring hydrocarbon group having 6-18 carbon atoms, a halogen atom, $OR_3$,

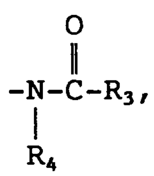 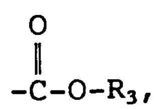 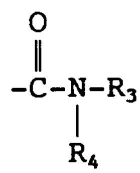

or -CN,

wherein $R_3$ and $R_4$ are each independently a hydrogen atom, an alkyl group having 1-18 carbon atoms; an alkyl group having 9-18 carbon atoms and having as substituents a hydroxyl group and a substituted or unsubstituted phenoxy group or cycloalkyloxy group; a 5- or 6-membered cyclic hydrocarbon group having 5-18 carbon atoms; or an alkoxyalkyl group having 2-18 carbon atoms; provided that $R_3$ together with $R_4$ and with

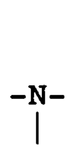 or 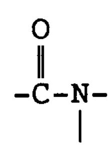

bonded thereto may form a 5- or 6-membered ring, which ring may have an alkyl group having 1-6 carbon atoms or an aryl group as a substituent,

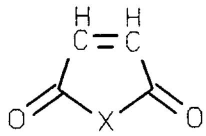

(2),

wherein X is

-O- or

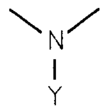

,

wherein Y is a substituted or unsubstituted phenyl group or a substituted or unsubstituted cyclohexyl group,

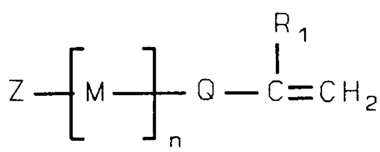

(3),

wherein n is a number of 2-100, Z is a hydrogen atom, a halogen atom, an alkyl group having 1-5 carbon atoms or a 6-membered ring hydrocarbon group having 6-18 carbon atoms, $R_1$ is the same as defined in the formula (1), Q is

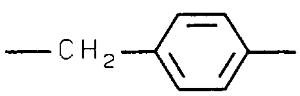

,

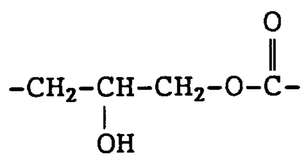

or

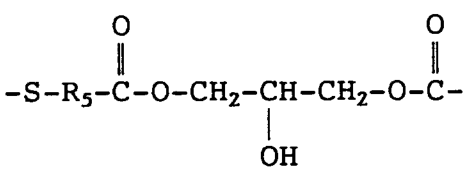

,

wherein $R_5$ is an alkylene group having 1-5 carbon atoms, and M is

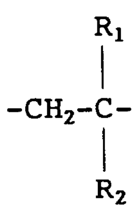

,

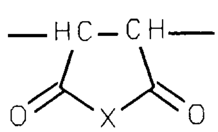

,

-D-O- or

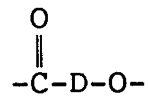
,

wherein $R_1$, $R_2$ and X are each the same as defined in the formula (1) and the formula (2), and D is an aromatic hydrocarbon group having 6-18 carbon atoms.

**4.** The process for producing a cured resin product according to Claim 1 wherein the thermosetting resin of the component (B) is at least one member selected from the group consisting of epoxy resin, polymaleimide resin, cyanate resin and phenol resin.

**5.** The process for producing a cured resin product according to Claim 1 wherein the compound having an addition-polymerizable group and capable of yielding a thermoplastic resin by its polymerization which is the component (A) is at least one member selected from the group consisting of styrene, methyl methacrylate, acrylonitrile and a combination of styrene with N-phenylmaleimide.

**6.** The process for producing a cured resin product according to Claim 1 wherein the compound having an addition-polymerizable group and capable of yielding a thermoplastic resin by its polymerization which is the component (A) is a fluorine-containing radical-polymerizable monomer.

**7.** The process for producing a cured resin product according to Claim 6 wherein a dispersion stabilizer is used in dispersing or dissolving the fluorine-containing radical-polymerizable monomer uniformly in liquid thermosetting resin.

**8.** The process for producing a cured resin product according to Claim 6 wherein domains of the polymer of the fluorine-containing radical-polymerizable monomer are distributed on the surface and/or in the inside of the cured product of the thermosetting resin which process comprises dissolving or dispersing the fluorine-containing radical polymerizable monomer uniformly in the liquid thermosetting resin, casting the resulting composition or coating it on the surface of a substrate and then bringing it to an elevated temperature thereby to polymerize the fluorine-containing polymerizable monomer and simultaneously to cure the thermosetting resin.

**9.** The process for producing a cured resin product according to Claim 6 wherein fine particles of the polymer of the fluorine-containing radical-polymerizable monomer are uniformly dispersed in the cured product of the thermosetting resin which process comprises dispersing the fluorine-containing radical-polymerizable monomer into a liquid thermosetting resin, casting the resulting composition and then bringing it to an elevated temperature thereby to polymerize the fluorine-containing radical-polymerizable monomer and simultaneously to cure the thermosetting resin.

**10.** The process for producing a cured resin product according to Claim 6 wherein the fluorine-containing radical-polymerizable monomer is a perfluoroalkyl group-containing polymerizable monomer represented by the formula (4)

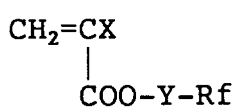
(4),

wherein X is a hydrogen atom, a chlorine atom, a fluorine atom or a methyl group; Y is an alkylene group having 1-4 carbon atoms or $-(CH_2)_nN(R)SO_2-$, in which R is an alkyl group having 1-4 carbon atoms or a hydrogen atom, and n is an integer of 1-4; and $R_f$ is a fluoroalkyl group having 1-15 carbon atoms and having a perfluoroalkyl group at the terminal.

**11.** The process for producing a cured resin product according to Claim 10 wherein the perfluoroalkyl group-containing polymerizable monomer is a fluorine-containing alcohol ester of acrylic acid,

methacrylic acid, fluoroacrylic acid or fluoromethacrylic acid.

**12.** The process for producing a cured resin product according to Claim 6 wherein a dispersion stabilizer is used when the fluorine-containing radical-polymerizable monomer is dispersed or dissolved uniformly into a liquid thermosetting resin.

**13.** The process for producing a cured resin product according to Claim 12 wherein the dispersion stabilizer is an oligomer or polymer having a fluoroalkyl portion.

**14.** The process for producing a cured resin product according to Claim 6 wherein the thermosetting resin is epoxy resin.

**15.** The process for producing a cured resin product according to Claim 1, 2, 3, 4, 5 or 6 wherein the polymerization completion time of the component (A) is made equal to or less than the gelation time of the component (B).

**16.** The process for producing a cured resin product according to Claim 15 which comprises mixing (A) a compound having an addition-polymerizable group and capable of yielding a thermoplastic resin by its polymerization and (B) a thermosetting resin to form a homogeneous solution or uniform dispersion, casting the resulting composition or coating it on the surface of a substrate and then bringing it to an elevated temperature.

**17.** A cured resin product wherein domains of a fluorine-containing polymer are distributed on the surface and in the inside of the cured product of a thermosetting resin.

**18.** A cured resin product wherein fine particles of a fluorine-containing polymer are uniformly dispersed in the cured product of a thermosetting resin.

**19.** The cured resin product according to Claim 17 wherein the fluorine-containing polymer is a fluorine-containing acrylate or methacrylate resin obtained by polymerizing a material comprising a perfluoroalkyl group-containing polymerizable monomer represented by the above formula (4) as an essential component.

**20.** The cured resin product according to Claim 18 wherein the fluorine-containing polymer is a fluorine-containing acrylate or methacrylate resin obtained by polymerizing a material comprising a perfluoroalkyl group-containing polymerizable monomer represented by the above formula (4) as an essential component.

**21.** The cured resin product according to Claim 19 wherein the fluorine-containing polymer is a polymer of a fluorine-containing alcohol ester of acrylic acid, methacrylic acid, fluoroacrylic acid or fluoromethacrylic acid or a copolymer of the ester with another monomer.

**22.** The cured resin product according to Claim 20 wherein the fluorine-containing polymer is a polymer of a fluorine-containing alcohol ester of acrylic acid, methacrylic acid, fluoroacrylic acid or fluoromethacrylic acid or a copolymer of the ester with another monomer.

**23.** The cured resin product according to Claim 17 wherein the thermosetting resin is an epoxy resin.

**24.** The cured resin product according to Claim 18 wherein the thermosetting resin is an epoxy resin.

**25.** A thermosetting resin composition comprising the perfluoroalkyl group-containing polymerizable monomer represented by the formula (4) and an epoxy resin as essential components.

**26.** The thermosetting resin composition according to Claim 25 which further comprises a dispersion stabilizer.

**27.** The thermosetting resin composition according to Claim 25 which further comprises an organic solvent.

**28.** A coating film forming composition which comprises (A) a compound having an addition-polymerizable group and capable of yielding a thermoplastic resin by its polymerization and (B) a thermosetting resin, said compound (A) being uniformly dissolved or dispersed in said thermosetting resin.

**29.** A water repellent coating film forming composition which comprises a thermosetting resin and a fluorine-containing radical-polymerizable monomer uniformly dispersed in the resin.

**30.** A water repellent coating material which comprises the water repellent coating film forming composition according to Claim 29 as the main component.

**31.** A resin composition for sealing semiconductor elements which comprises (A) a compound having an addition-polymerizable group and capable of yielding a thermoplastic resin by its polymerization and (B) a thermosetting resin, said compound being uniformly dissolved or dispersed in said thermosetting resin.

**32.** The resin composition for sealing semiconductor elements according to Claim 31 wherein a fluorine-containing radical-polymerizable monomer is uniformly dispersed in the thermosetting resin.

**33.** A resin composition for sealing semiconductor elements which comprises the following components (a), (b), (c) and (d) as essential ingredients, wherein the fluorine-containing radical-polymerizable monomer of the component (c) is uniformly dispersed in the system in the presence of a dispersion stabilizer:
(a) an epoxy resin having at least two epoxy groups in the molecule,
(b) an epoxy resin curing agent,
(c) a fluorine-containing radical-polymerizable monomer,
(d) radical polymerization initiator.

**34.** The resin composition for sealing semiconductor elements according to Claim 33 wherein the fluorine-containing radical-polymerizable monomer is a fluorine-containing alcohol ester of acrylic acid and/or methacrylic acid.

**35.** A resin-sealed semiconductor device which is obtained by sealing with the resin composition for sealing semiconductor elements according to Claim 33.